(19) **Europäisches Patentamt**
**European Patent Office**
**Office européen des brevets**

(11) **EP 2 804 445 A1**

(12) # EUROPEAN PATENT APPLICATION
published in accordance with Art. 153(4) EPC

(43) Date of publication:
**19.11.2014 Bulletin 2014/47**

(51) Int Cl.:
***H05B 37/02*** (2006.01)

(21) Application number: **12865366.4**

(22) Date of filing: **27.11.2012**

(86) International application number:
**PCT/KR2012/010078**

(87) International publication number:
**WO 2013/105732 (18.07.2013 Gazette 2013/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.01.2012 KR 20120002753**

(71) Applicant: **Itllight Co., Ltd.**
**Gwangju 500-826 (KR)**

(72) Inventor: **CHO, Myung-Sub**
**Gwangju 500-826 (KR)**

(74) Representative: **Fenix Legal KB**
**Stureplan 4C, 4 tr**
**114 35 Stockholm (SE)**

(54) **CONTROL APPARATUS AND METHOD FOR AUTOMATICALLY TURNING STREET LAMP ON OR OFF**

(57) The present invention relates to a control apparatus and method for automatically turning a street lamp on or off. The apparatus includes: a light measuring unit for measuring the external illumination around a street lamp in real time; a light collecting unit for recording the external illumination over a predetermined period to perform periodic updates; a reference illumination calculating unit for analyzing the external illumination to calculate a turn-on brightness level and a turn-off brightness level which are respectively references for output controls for turning the street lamp on and off; and an output controller for comparing the turn-on brightness level, the turn-off brightness level, and the external illumination to control the output power supply voltage for the street lamp.

FIG. 1

**EP 2 804 445 A1**

## Description

## Technical Field

The present invention relates, in general, to an apparatus and method for automatically controlling the turning-on/off of a street light and, more particularly, to an apparatus and method for automatically controlling the turning-on/off of a street light, which analyze periodic records of external illuminance and actively control the street light based on the results of the analysis.

## Background Art

In the past, automatic street light switches for automatically controlling the turning-on/off of a street light have been implemented using a photoelectric ON/OFF method based on the photosensitization of light and a timer method based on the operation of a clock.

A conventional photoelectric switch is composed of a cadmium sulfide (CDS) sensor and a logic circuit, and is configured such that a turn-on threshold and a turn-off threshold are set to references and such that if the receiving level of light incident on the CDS decreases below the turn-on threshold, a street light is turned on, and if the receiving level increases above the turn-off threshold, the street light is turned off. However, in such a photosensor method using the CDS and the logic circuit, it is impossible to distinguish weather changes from the interference of surrounding light, thus causing a false ON/OFF operation by which the street light is turned on in daylight or turned off at night.

Meanwhile, a conventional timer-type automatic switch, which is a scheme dependent on the operation of a clock, generally uses a crystal oscillator or the like having an oscillation error depending on temperature change, and thus if operation is maintained for a long period of time in an outdoor environment having temperature change, errors are accumulated.

In this way, if the current time deviates from correct time due to the accumulation of errors in the clock, considerable malfunctioning is caused in which daytime and nighttime are switched in morning and evening periods, and the street light is turned on in the daytime and is turned off in the nighttime. Further, in the case of the timer method, even if the actual time is accurately adjusted, weather changes cannot be sensed, so that a street light may not be turned on even when it is dark early due to cloudy weather, and so that a turn-off time must be deferred due to late daybreak in cloudy weather, but there is no means for sensing weather, thus making it impossible to conform to weather changes.

## Disclosure

## Technical Problem

An object of the present invention is to provide an apparatus and method for automatically controlling the turning- on/off of a street light, which analyze continuous records of external illuminance, calculate reference illuminances and time limits for turning-on and off of the street light, and automatically control the output of the street light, thus autonomously solving timer error and light interference.

## Technical Solution

An apparatus for automatically controlling turning on/off of a street light according to the present invention to accomplish the above object includes a photometric unit for measuring external illuminance from surroundings of a street light in real time; an illuminance collection unit for recording the measured external illuminance at intervals of a predetermined period and periodically updating the external illuminance; a reference illuminance calculation unit for analyzing the external illuminance recorded at intervals of the predetermined period, and calculating turn-on illuminance and turn-off illuminance that are references for control of turn-on output and turn-off output of the street light; and an output control unit for comparing the turn-on illuminance, the turn-off illuminance, and the external illuminance with each other and controlling output power of the street light.

Further, the apparatus of the present invention may further include a time limit calculation unit for analyzing the external illuminance recorded at intervals of the predetermined period, and calculating, for the street light, time limits including at least one of a turn-on maintenance time for which turning-on is maintained, a turn-off maintenance time for which turning-off is maintained, a turn-on waiting time for which switching to turning-on is performed, and a turn-off waiting time for which switching to turning-off is performed

In this case, the output control unit may control the output power of the street light using the time limits.

The illuminance collection unit may sample the external illuminance, records the external illuminance at regular periods, and calculate daily illuminance updated depending on a variation in the external illuminance for at least one recent day.

The reference illuminance calculation unit may analyze the daily illuminance calculated by the illuminance collection unit, and update the turn-on illuminance and the turn-off illuminance that are the references for control of turn-on output and turn-off output of the street light.

The time limit calculation unit may divide a variation period of daily illuminance according to a rate of illuminance, calculate a period for which the external illuminance exceeds daytime period reference illuminance as a daytime period for the street light, calculate illuminance variation periods present before and after the daytime period as a morning period and an evening period, and calculate a residual period as a nighttime period.

The time limit calculation unit may calculate the turn-off maintenance time, the turn-off waiting time, the turn-on waiting time, and the turn-on maintenance time from the daytime period, the morning period, the evening period, and the nighttime period, respectively.

The output control unit may be configured to, if the external illuminance becomes greater than the turn-off illuminance in the morning period, turn off the street light, and if the external illuminance does not become greater than the turn-off illuminance in the morning period and the turn-off waiting time has elapsed, turn off the street light.

The output control unit may be configured to, if the external illuminance becomes less than the turn-on illuminance in the evening period, turn on the street light, and if the external illuminance does not become less than the turn-on illuminance in the evening period and the turn-on waiting time has elapsed, turn on the street light.

The illuminance collection unit may sample the external illuminance measured by the photometric unit, and filter a variation in illuminance equal to or greater than a reference value and external interference.

Further, the apparatus may further include a communication unit for receiving an external command from a remote management device or transmitting operating states of the street light to outside of the apparatus.

In addition, a method of automatically controlling turning-on/off of a street light according to the present invention to accomplish the above object includes a photometric step of measuring external illuminance from surroundings of a street light in real time; an illuminance collection step of recording the measured external illuminance at intervals of a predetermined period and periodically updating the external illuminance; a reference illuminance calculation step of analyzing the external illuminance recorded at intervals of the predetermined period, and calculating turn-on illuminance and turn-off illuminance that are references for control of turn-on output and turn-off output of the street light; and an output control step of comparing the turn-on illuminance, the turn-off illuminance, and the external illuminance with each other and controlling output power of the street light.

Further, the present invention may further include, before the output control step, a time limit calculation step of analyzing the external illuminance recorded at intervals of the predetermined period, and calculating time limits including at least one of a turn-on maintenance time for which turning-on of the street light is maintained, a turn-off maintenance time for which turning-off of the street light is maintained, a turn-on waiting time for which the street lamp switches to turning-on, and a turn-off waiting time during which the street light switches to turning-off.

The illuminance collection step may include sampling the external illuminance, recording the external illuminance at regular periods, and calculating daily illuminance updated depending on a variation in the external illuminance for at least one recent day.

The reference illuminance calculation step may include analyzing the daily illuminance calculated at the daily illuminance calculation step, and updating the turn-on illuminance and the turn-off illuminance that are the references for control of turn-on output and turn-off output of the street light.

The time limit calculation step may include dividing a variation period of daily illuminance according to a rate of illuminance, calculating a period for which the external illuminance exceeds daytime period reference illuminance as a daytime period for the street light, calculating illuminance variation periods present before and after the daytime period as a morning period and an evening period, and calculating a residual period as a nighttime period.

The time limit calculation step may be configured to calculate the turn-off maintenance time, the turn-off waiting time, the turn-on waiting time, and the turn-on maintenance time from the daytime period, the morning period, the evening period, and the nighttime period, respectively.

The output control step may be configured to, if the external illuminance becomes greater than the turn-off illuminance in the morning period, turn off the street light.

The output control step may be configured to, if the external illuminance does not become greater than the turn-off illuminance in the morning period and the turn-off waiting time has elapsed, turn off the street light.

The output control step may be configured to, if the external illuminance becomes less than the turn-on illuminance in the evening period, turn on the street light.

The output control step may be configured to, if the external illuminance does not become less than the turn-on illuminance in the evening period and the turn-on waiting time has elapsed, turn on the street light.

The illuminance collection step may include sampling the external illuminance measured at the photometric step, and filtering a variation in illuminance equal to or greater than a reference value and external interference.

Meanwhile, the present invention may further include a communication step of receiving an external command from a remote management device or transmitting operating states of the street light to outside.

**Advantageous Effects**

In accordance with the present invention, since time spans for inductive control by a sensor are limited to morning and evening time spans calculated based on the intensity of light detected in real time, there is an advantage in that a light interference section is limited. Since references for turning-on and off of a street light are calculated in association with each other via the analysis of records of external light intensity, the present invention is advantageous in that it is actively adapted for usage environment such as weather changes, thus providing optimal turn-on and turn-off conditions.

Further, the present invention is advantageous in that times corresponding to night and day are obtained based on external illuminance measured in real time, so that external light disturbance is prevented by a timer which maintains turning-off in the daytime and maintains turning-on in the nighttime, thus solving malfunctioning in which daytime and nighttime operations are switched due to the interference of external light and accumulative error of a clock.

**Description of Drawings**

Fig. 1 is a block diagram showing the configuration of an apparatus for automatically controlling the turning-on/off of a street light according to the present invention;

Fig. 2 is a reference diagram illustrating the turn-on and turn-off section setting operation of the apparatus for automatically controlling the turning-on/off of a street light according to the present invention;

Fig. 3 is a diagram illustrating a daily illuminance graph applied to the automatic street light turning-on/off control apparatus according to the present invention;

Fig. 4 is a flowchart showing the operation flow of an automatic street light turning-on/off control method according to the present invention;

Fig. 5 is a flowchart showing the operation flow of the automatic street light turning-on/off control method in an external signal processing mode according to the present invention;

Fig. 6 is a flowchart showing the operation flow of the automatic street light turning-on/off control method in a start mode according to the present invention;

Fig. 7 is a flowchart showing the operation flow of the automatic street light turning-on/off control method in an operation mode according to the present invention; and

Fig. 8 is a flowchart showing the operation of the automatic street light turning-on/off control method in a switch mode according to the present invention.

**Best Mode**

Hereinafter, embodiments of the present invention will be described with reference to the attached drawings.

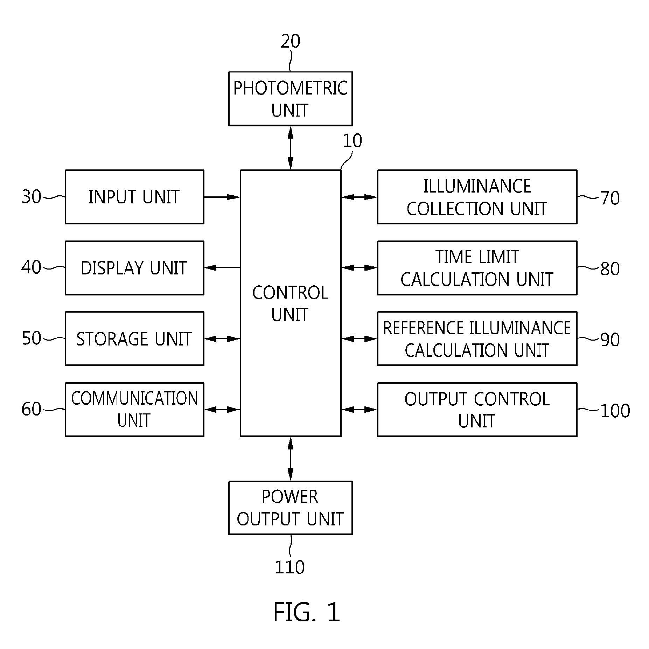

Fig. 1 is a block diagram showing the configuration of an apparatus for automatically controlling the turning-on/off of a street light according to the present invention.

As shown in Fig. 1, the automatic street light turning-on/off control apparatus according to the present invention includes a control unit 10, a photometric unit 20, an input unit 30, a display unit 40, a storage unit 50, a communication unit 60, an illuminance collection unit 70, a time limit calculation unit 80, a reference illuminance calculation unit 90, an output control unit 100, and a power output unit 110.

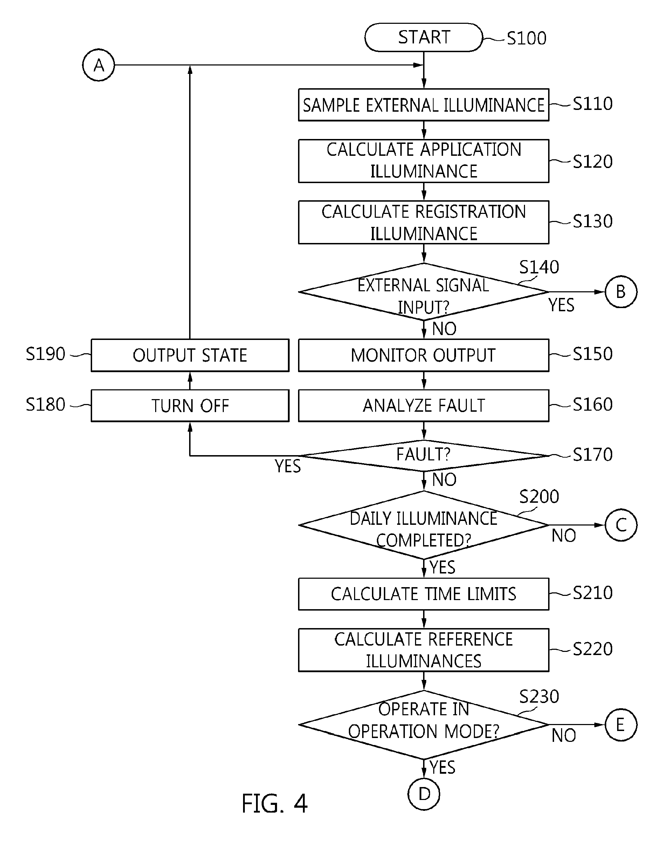

The control unit 10 controls the operations of respective components of the automatic street light turning-on/off control apparatus by running a management program. Further, the control unit 10 controls the operations of the automatic street light turning-on/off control apparatus in a start mode and an operation mode. When the automatic street light turning-on/off control apparatus is initially operated, the control unit 10 operates the apparatus in the start mode. If a predetermined time has elapsed from the operation in the start mode, the control unit 10 operates the apparatus in the operation mode. A detailed description of individual mode operations will be described in detail later with reference to a description of Figs. 4 to 9.

The photometric unit 20 is configured such that external illuminance is sensed by a photometric sensor arranged to be exposed to external light, and sensed illuminance information is measured by a photometric means for outputting the illuminance information as digital values.

Here, the photometric unit 20, which is a digital photometric means for measuring light in a sufficiently wide band so that daily changes occurring in the daytime and nighttime in at least one day may be continuously measured, may preferably be implemented as any one of an illuminometer, a photometer, and a luminance meter.

In the following embodiments of the present invention which will be described below, an illuminometer used by the unit of illuminance will be exemplified.

Therefore, the photometric unit 20 is operated such that external illuminance is sensed by the photometric sensor arranged to be exposed to external light, and the external illuminance [Lx] is measured by the illuminometer for outputting the sensed illuminance information as digital illuminance values.

The input unit 30 receives external commands, variables, etc., and transfers them to the control unit 10.

The display unit 40 displays the operating states of the street light and the automatic turning-on/off control apparatus. As an example, the display unit 40 may display the management states of the street light and the automatic street light turning-on/off control apparatus on a display means such as a Liquid Crystal Display (LCD), and may output operating states via the communication unit 60 and an output means such as a Light Emitting Diode (LED).

In the storage unit 50, the initial values of management variables for initial operation, together with the management program, are stored. In this case, the initial values include management variables such as reference illuminances, and these are preferably stored in flash memory or Electrically Erasable Programmable Read-Only Memory (EEPROM) so that they are not initialized in the start mode against a reset operation or a power failure. Variables, such as application illuminance, daily illuminance, and time limits which vary in real time depending on a variation in external illuminance, are preferably stored in Random Access Memory (RAM) enabling updating to be freely performed.

Meanwhile, of the data stored in the storage unit 50, pieces of data, such as reference illuminances, that is, turn-on illuminance and turn-off illuminance, and the time limits which are updated depending on the variation in external illuminance, are calculated according to the daily variation of external illuminance, and thus they may be updated with new data at least every 24 hours.

Further, the communication unit 60 transmits and receives data while communicating with a remote management device. In this case, the communication unit 60 receives external commands from the remote management device, and transmits the results of processing or a resulting operating state based on the external commands to the remote management device or the outside of the apparatus.

The illuminance collection unit 70 samples external illuminance measured by the photometric unit 20 at a predetermined sampling period, records the external illuminance in the form of continuous data for a predetermined time period, and updates the continuous data in real time. The records of illuminance collected by the illuminance collection unit 70 are formed by collecting the distribution of illuminance at intervals of 24 hours so that illuminance variation having a period of at least a day may be analyzed. The illuminances collected in this way are updated by real-time sampling of external illuminance, and thus daily illuminance of at least one recent day is calculated.

The time limit calculation unit 80 analyzes the illuminance distribution appearing in the daily illuminance, calculates a turn-on maintenance time from a nighttime period for which the street light is maintained in a turn-on state, a turn-off waiting time from a morning period for which the street light switches from the turn-on state to a turn-off state, a turn-off maintenance time from a daytime period for which the street light is maintained in the turn-off state, and a turn-on waiting time from an evening period for which the street light switches from the turn-off state to the turn-on state, at least one or more times every day, updates the calculated times, and sets the updated times to management variables.

The reference illuminance calculation unit 90 calculates turn-on illuminance that is a reference for turning on the street light and turn-off illuminance that is a reference for turning off the street light, from daily illuminance.

The output control unit 100 compares the turn-on maintenance time, the turn-off maintenance time, the turn-on waiting time, the turn-off waiting time, the turn-on illuminance, and the turn-off illuminance with the external illuminance, controls the output of the street light, and also controls the output even in response to external signals.

Next, variables calculated depending on the variation in external illuminance will be described below.

The illuminance collection unit 70 may calculate application illuminance as a mean value obtained by sampling illuminance obtained from an illuminance sensor for a predetermined period of time, summing sampled illuminance values, and dividing the summed illuminance value by the number of samples, and may also calculate registration illuminance as a mean value obtained by sampling illuminance obtained from the illuminance sensor for a predetermined period of time, summing sampled illuminance values, and dividing the summed illuminance value by the number of samples.

In this case, a difference between the application illuminance and the registration illuminance is that the application illuminance is an instantaneously filtered illuminance value which makes a recognition delay time shorter by filtering temporary variation and external interference from the external illuminance measured in real time, and the registration illuminance is an illuminance value obtained by producing the tendency of daily illuminance variations in the nighttime, morning, daytime, and evening from the external illuminance measured in real time, wherein the recognition time may be relatively long.

The registration illuminance may be applied by sampling the external illuminance, but it is more preferable to perform sampling based on application illuminance in which a temporary variation in external illuminance sampled by the illuminance collection unit 70 is mitigated and external interference is filtered.

Further, it is possible for the output control unit 100 to control the output of the street light by using external illuminance that is varying in real time, but it is more preferable to control the output of the street light based on the application illuminance so that the turning-on and turning-off of the street light are stabilized by filtering the temporary variation in external illuminance and external light interference.

The time limit calculation unit 80 may calculate the range of illuminance, which is calculated from daily illuminance collected by the illuminance collection unit 70 and which is greater than illuminance at sunrise in the distribution of continuous daily illuminance, as a daytime period. Here, when it is assumed that the illuminance at sunrise is about 3% compared to the maximum illuminance of the daily illuminance distribution, and a period after sunrise is typically regarded as daytime, the illuminance of the daytime period corresponds to the top 97% of the daily illuminance. This shows that the daytime period is set based on a fact that illuminance at sunrise in the daily illuminance distribution on a clear day is about 3% of the daily illuminance, but the maximum photometric value may differ depending on the measurement range and the implementation form of a measuring device, and thus a designated percentage is only a preferred example of an index for determining the daytime period and is not limited thereto.

Meanwhile, when the daytime period of the overall one day period is calculated in this way, intervals for which illuminance changes before and after the daytime period are set to a morning period and an evening period, respectively, and they each typically occupy about 72 minutes. The remaining period of one day other than the daytime period, the morning period, and the evening period may be calculated as a nighttime period.

The morning period and the evening period, each having a length of 72 minutes, denote a period ranging from the time immediately before dawn to the time of sunrise and a period from the time of sunset to the time at which it is completely dark, respectively, wherein the length of 72 minutes corresponds to the astronomical twilight time at which a magnetic dip is between 12 and 18 degrees below the horizon according to the altitude of the sun, wherein the longest time thereof is obtained by converting the largest angle of 18 degrees into time.

The astronomical twilight time refers to a phenomenon in which as the daytime is longer, the astronomical twilight time is closer to 48 minutes, and in which, as the daytime becomes shorter in a direction toward polar regions, the astronomical twilight time is approximate to 72 minutes, and thus the astronomical twilight time changes in inverse proportion to the length of the daytime.

Meanwhile, in an actual environment, such a time not only differs in individual regions according to the latitude and topography, but also is influenced by weather. Illuminances at times of sunrise and sunset on a cloudy day are less than those on a clear day, and as weather becomes cloudier, the daytime period becomes shorter, and the morning period and the evening period become longer proportionally, thus exhibiting daily illuminance similar to the characteristics of daily variation at high latitude.

In the case of the time ranging from the start of dawn to sunrise, if the range of a time of 72 minutes is a basis as the astronomical twilight time, and a time of about 30 minutes required to reach illuminance that can be regarded as that of the actual sunrise is added in consideration of topographical influence and weather changes, a maximum of about 102 minutes may be set to valid time for each of the morning period and the evening period.

Since the variations in the length of the morning period and the evening period are in inverse proportion to the length of the daytime calculated based on daily illuminance, the length variations may be calculated in association with the length of the daytime period.

The calculation of these length variations may be a useful means enabling a low illuminance band to be identified under a condition in which the inference of surrounding light may occur in a band of illuminance less than that of the daytime period.

In the operation mode, the turn-on maintenance time acts as the time for which the turn-on state of the street light is maintained in the nighttime period after the street light has been turned on in the evening period, and the turn-off maintenance time acts as the time for which the turn-off state of the street light is maintained in the daytime period after the street light has been turned off in the morning period.

Meanwhile, a predetermined rate of the time length of the daytime period calculated as described above may be calculated as the turn-off maintenance time, and a predetermined rate of the time length of the nighttime period may be calculated as the turn-on maintenance time, wherein the length of the turn-off maintenance time may be shorter than that of the daytime period, the length of the turn-on maintenance time may be shorter than that of the nighttime period, and times corresponding to the lengths of the nighttime period and daytime period, reduced in this way, are proportionally distributed to the morning period and the evening period.

The predetermined rate applied here is previously set to an environmental variable and may correspond to a time length of about 30 minutes in which the influence of weather is taken into consideration, but, upon actual application, it is preferable to apply the rate by adding or subtracting a time of about 1 hour in consideration of the topographical condition, the interference of surrounding light, etc.

In this case, the calculation of the time limits may be performed by multiplying a sampling period by the number of samples of daily illuminance included in each set period of the daily illuminance, and converting resulting values into time values.

Further, in a control mode, if 24 hours have elapsed from starting, and daily illuminance has been completed, the program running mode switches from the start mode to an operation mode, and in this switching procedure, a time point in the daily illuminance at which the current time point is located is calculated. Meanwhile, the daytime period, the nighttime period, the morning period, the evening period, and the current time point need to be periodically updated one or more times every day, but they are preferably updated based on time at which at least one period starts or ends.

The current time point may be calculated by multiplying a sampling period by the number of samples of registration illuminance from the start point of the period during which the recent registration illuminance is located.

The storage unit 50 stores illuminance values and variables calculated by the illuminance collection unit 70, the time limit calculation unit 80, and the reference illuminance calculation unit 90, and allow the values stored therein to be periodically updated with the lapse of time due to the periodic sampling of external illuminance.

Meanwhile, the turn-off illuminance calculated by the reference illuminance calculation unit 90 is an illuminance value that is a reference for the determination of a turn-off state, and may be calculated using the following procedure on the basis of daily illuminance obtained for a predetermined period of about 60 minutes before the turn-off waiting time so that the turn-off illuminance is calculated from nighttime illuminance immediately before the turn-off waiting period close to dawn in the range of daily illuminance in order to reduce a difference between the turn-off waiting section and weather changes.

In this case, if it is assumed that nighttime illuminance is Ln and turn-off illuminance is Loff, calculation formulas are represented by:

Ln = sum of registration illuminances / the number of samples for 60 minutes before start point of turn-on waiting time

$$\text{Loff} = \text{Ln} * 1.2 + 5 \ [\text{lx}]$$

These may reflect recent weather changes upon calculating turn-off illuminance based on the recent nighttime illuminance close to the turn-on waiting section and may make a difference with turn-off illuminance so that a variation in illuminance is clarified from the nighttime illuminance, thus reducing the influence of interference of external instantaneous light.

Meanwhile, the turn-on illuminance is an illuminance that is a reference for the determination of a turn-on state, and is preferably set to a value equal to or less than the turn-off illuminance.

The reason for this is that, in the operation mode, a turn-on state is calculated only in the turn-on waiting section, a turn-off state is calculated only in the turn-off waiting section, and a comparison between them is performed, and thus a comparison between the turn-on illuminance and the turn-off illuminance may not be influenced, but, in the start mode before the turn-on waiting section and the turn-off waiting section are set, if the turn-on illuminance is greater than the turn-off illuminance, turn-on and turn-off conditions overlap when the current illuminance is a value between the turn-on illuminance and the turn-off illuminance, and thus correct determination may not be performed.

Further, the turn-off waiting time is a band in which the nighttime period is terminated and external illuminance is compared with the turn-off illuminance to output a turn-off state in the operation mode, and the turn-on waiting time is a band in which the daytime period is terminated and the external illuminance is compared with the turn-on illuminance to output a turn-on state in the operation mode, wherein the turn-off and turn-on waiting times are calculation sections in which output switches between the turn-on output and the turn-off output depending on the variation in measured external illuminance. In this case, it is preferable to determine turn-on and turn-off states depending on the variation in the application illuminance so that the influence of the interference of external light and a rapid variation in illuminance on the external illuminance to be compared is reduced.

When any time at which the mode switches from the start mode to the operation mode is present in the daytime period, the daytime period in which a turn-off state must be maintained may be shorter than the turn-off maintenance time. At this time, when it is assumed that the time for which the turn-off state must be maintained is called a residual turn-off time, and that the time for which a turn-on state must be maintained when the time at which the mode switches to the operation mode is present in the nighttime period is a residual turn-on maintenance time, the calculation of the residual turn-on maintenance time and the residual turn-off maintenance time may be performed such that, if current time at which daily illuminance has been completed belongs to the daytime period, the time [min] obtained by subtracting time, obtained by multiplying the sampling period by the number of samples of daily illuminance from the start point of the daytime period up to the current time, from the turn-on maintenance time may be calculated as the residual turn-off maintenance time, and such that, if the current time belongs to the nighttime period, time [min] obtained by subtracting time, obtained by multiplying the sampling period by the number of samples of the daily illuminance from the start time of the nighttime to the current time, from the turn-on maintenance time may be calculated as the residual turn-on maintenance time.

In this case, the output control unit 100 outputs turn-on/off control signals required to control the output power of the street light by calculating the variation in external illuminance, the reference illuminances, the turn-on maintenance time, and the turn-off maintenance time set by the time limit calculation unit 70 in association with each other.

Meanwhile, the output control unit 100 controls the turning-on/off of the street light in the start mode until a management program is initiated and the daily illuminance is completed. Control in the start mode is performed via illuminance control depending on the variation in external illuminance such that, until the external illuminance becomes greater than the turn-off illuminance, the street light is maintained in a turn-on state and such that, if the external illuminance becomes greater than turn-off illuminance, the street light switches from the turn-on state to a turn-off state and is maintained in the turn-off state until the external illuminance becomes less than the turn-on illuminance.

As the variation in external illuminance applied to the output control unit 100, external illuminance that is input in real time may be used, but it is preferable to use application illuminance to stabilize the control of the turning-on and turning-off of the street light because the external illuminance may be sensitive to real-time variation in external light.

Further, the output control unit 100 may output a dimming control signal required to control the magnitude of output current in response to the value of dimming control by the automatic street light turning-on/off control apparatus.

Meanwhile, the output control unit 100 may further include a current detection unit and may be configured to detect and analyze current that is supplied to the street light, and determine a fault from the results of the analysis.

The power output unit 110 controls power that is output to the street light in response to a turn-on/off control signal received from the communication unit 60 as an external signal and a turn-on/off control signal received from the output control unit 100. Here, the power output unit 110 controls the supply of power to the street light and the blocking of the supply of power through a relay means or a Pulse Width Modulation (PWM) means. Further, the power output unit 110 may perform turn-on and turn-off operations, together with a dimming operation, by outputting current having a designated magnitude in response to a dimming control signal output from the output control unit 100.

In another example, the power output unit 110 may control the supply of power to the street light and the blocking of the supply of power by driving a relay in response to the turn-on/off control signal.

In this way, the automatic street light turning-on/off control apparatus according to the present invention may calculate variables required for management based on external illuminance values collected in real time from the surroundings of a typical street light, and apply those variables to the turning-on/off control and the dimming control, thus enabling a variation in external illuminance to be reflected in real time in the turning-on/off control and the dimming control.

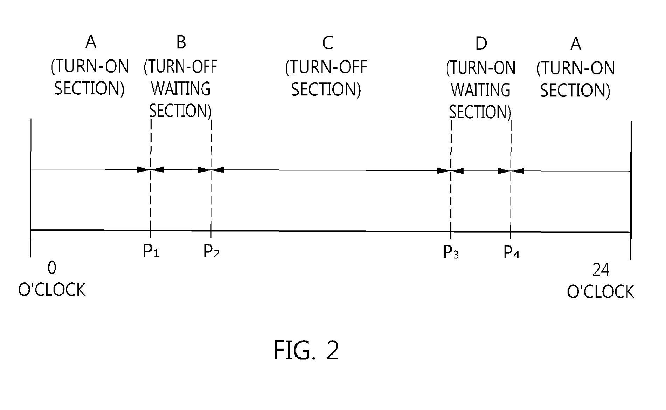

Fig. 2 is a reference diagram illustrating a turn-on and turn-off section setting operation in the automatic street light turning-on/off control apparatus according to the present invention.

As shown in Fig. 2, sections operated by the automatic street light turning-on/off control apparatus according to the present invention in the operation mode may be chiefly divided into A: turn-on section, B: turn-off waiting section, C: turn-off section, and D: turn-on waiting section. Further, in Fig. 2, since time intervals corresponding to the respective sections are updated and managed with valid sections in one day, they are indicated based on 24 hours.

On the basis of 24 hours, a section from 0 o'clock to time P1 is a turn-on section, and corresponds to a nighttime period and a turn-on maintenance time for which turning-off is blocked.

Meanwhile, if time P1 has passed, the nighttime period, that is, the turn-on maintenance time, is terminated, and since then, a current state switches to a turn-off state due to turn-off illuminance until time P2 passes. In other words, a section from time P1 to P2 is the turn-off waiting section, that is, a morning period, for which if the external illuminance becomes greater than the turn-off illuminance, the current state switches to the turn-off state, otherwise the turn-on state is maintained.

Meanwhile, unless the external illuminance becomes greater than the turn-off illuminance until the time P2 passes, the termination of the turn-off waiting time acts prior to the variation in the external illuminance, and thus the current state switches to the turn-off state. The turn-off state is maintained during the daytime period, that is, a section from time P2 to time P3, which corresponds to the turn-off maintenance time for which the turn-off state is maintained.

If time P3 has passed, the daytime period, that is, the turn-off maintenance time, is terminated, and since then, the turn-on waiting section, that is, the evening period, is maintained up to time P4, for which, if the external illuminance becomes less than the turn-on illuminance, the current state switches to the turn-on state, otherwise the turn-off state is maintained.

Meanwhile, unless the external illuminance becomes less than the turn-on illuminance until time P4 passes, the termination of the turn-off waiting time acts prior to the variation in the external illuminance, and thus the current state switches to the turn-on state. The turn-on state is maintained during the nighttime period, that is, a section from time P4 to 24 o'clock, and is also maintained until the next time P1.

In this way, the reason for limiting the turn-on waiting section and the turn-off waiting section is that it is preferable to limit actual times, at which turn-on and turn-off operations are determined based on the control of illuminance, to morning and evening, and that variations in the illuminance of the nighttime and daytime periods correspond to sections which do not require changes in turning-on and turning-off control, thus eliminating external interference while actively reflecting weather changes by merely maintaining an output state using a timer.

Further, since the turn-on illuminance and the turn-off illuminance are not fixed values, and references for turning-on and turning-off are periodically updated based on daily illuminance collected for one recent day, the turning-on/off of the street light may be actively controlled based on the surrounding environment.

Furthermore, times P1, P2, P3, and P4 are not fixed times, but are values updated together in accordance with the periodic update of daily illuminance, thus enabling the turning-on and turning-off of the street light to be realistically controlled based on the surrounding environment.

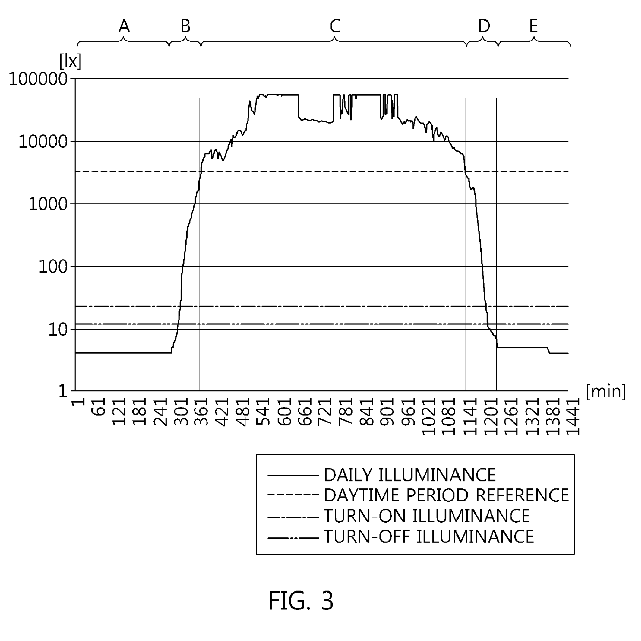

Fig. 3 is a diagram illustrating the log graph of daily illuminance applied to the automatic street light turning-on/off control apparatus according to the present invention.

As shown in Fig. 3, in relations between management variables calculated by the recording and analysis of illuminance, registration illuminances calculated from external illuminance are recorded for 24 hours, and then a brimmed hat-shaped daily illuminance graph, such as that of Fig. 3, may be represented.

A section of registration illuminance distribution exceeding a second reference value corresponding to a predetermined upper rate based on the daily illuminance may be classified as a daytime period C. In this way, the reason for identifying the daytime period C using the predetermined upper rate of the daily illuminance of the daytime period C is that the intensity of illuminance is much greater than that of a nighttime period A, and that, when daily illuminance varies depending on weather changes and surrounding conditions, the daytime period C may change according to the rate, and thus the nighttime period A may also change.

Meanwhile, the calculation of a morning period B and an evening period D may be performed by calculating a section of illuminance distribution below a first reference value corresponding to a predetermined lower rate of the daily illuminance. However, since the start point of the morning period B and the end point of the evening period D are flexible to weather changes, a predetermined section before the start point of the daytime period C may be calculated as the morning period B, a predetermined section from the end point of the daytime period may be calculated as the evening period D, and the residual section may be calculated as the nighttime period A.

In this case, the time lengths of predetermined sections to which the morning period and the evening period are allocated are based on 48 minutes, that is, a minimum time of the astronomical twilight time, the nighttime period remaining after the turn-on maintenance time has been terminated is incorporated into the morning period, and then the morning period is increased proportionally. Further, the daytime period remaining after the turn-off maintenance time has been terminated is incorporated into the evening period and is applied to the evening period.

Meanwhile, since the turn-on illuminance and the turn-off illuminance are calculated based on the records of illuminance for a predetermined section immediately before the nighttime period of daily illuminance is terminated, the turn-off illuminance and the turn-on illuminance may be set in association with the periodic variation in external illuminance.

Fig. 4 is a flowchart showing the operation flow of an automatic street light turning-on/off control method according to the present invention.

As shown in Fig. 4, the automatic street light turning-on/off control apparatus according to the present invention starts to run a program if power has been supplied to the apparatus (S100), samples external illuminance measured by an illuminometer (S110), calculates application illuminance via the sampling (S110) of the external illuminance (S120), calculates registration illuminance, records the calculated registration illuminance as daily illuminance, updates the daily illuminance (S130), and waits for the input of an external signal.

Thereafter, if an external signal is input (S140), the apparatus proceeds to B to operate in an 'external signal processing mode' (S300).

In contrast, if any external signal is not input (S140), the apparatus monitors output (S150), and analyzes a fault (S170).

If a fault has occurred (S170), turning-off is output (S180), and a current state is output (S190). Thereafter, the apparatus returns to step 'S110' where the subsequent procedure thereof is re-performed. If a fault has not occurred (S170), the apparatus determines whether daily illuminance has been completed, and if the daily illuminance has not been completed (S200), proceeds to C to operate in a 'start mode' (S400).

At 'S200,' if it is determined that daily illuminance has been completed, the apparatus fetches the daily illuminance, calculates time limits based on the daily illuminance (S210), analyzes the daily illuminance, and calculates reference illuminances (S220). The environmental variables calculated at S210 and S220 are stored in the storage unit 50, and previously stored values are periodically updated.

Thereafter, if the management variables have been calculated, the apparatus determines whether a control mode is an 'operation mode' (S230), and if the control mode is the 'operation mode', performs a procedure subsequent to D, otherwise the apparatus proceeds to a procedure subsequent to E to operate in a 'switch mode.'

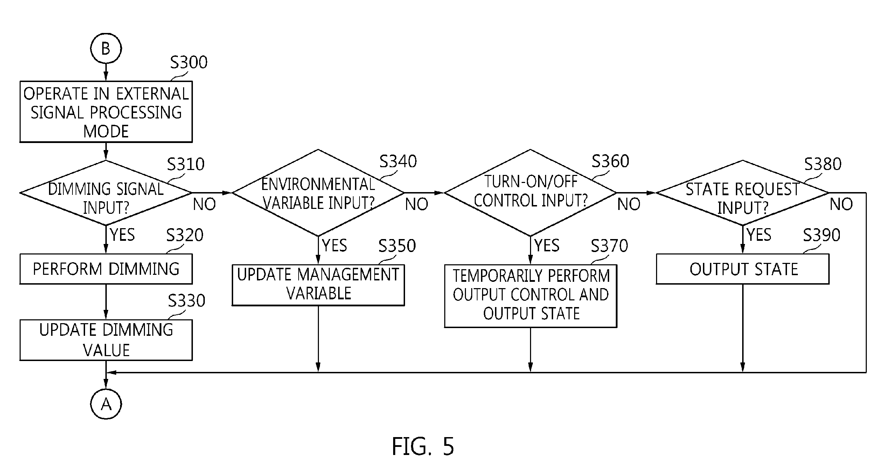

Fig. 5 is a flowchart showing the operation flow of the automatic street light turning-on/off control method in the external signal processing mode according to the present invention.

As shown in Fig. 5, the automatic street light turning-on/off control apparatus is configured to, when operating in the external signal processing mode

(S300), determine whether an input external signal is a dimming signal (S310). If it is determined that the external signal is the dimming signal, the apparatus performs dimming (S320), and updates a dimming value (S330).

In contrast, if it is determined that the external signal is not a dimming signal, the apparatus determines whether the external signal is an environmental variable (S340). If it is determined that the external signal is the environmental variable, the apparatus updates preset management variables depending on the input environmental variable (S350). If the external signal is not an environmental variable, the apparatus determines, based on a comparison, whether the external signal is a turn-on/off control signal (S360), and if it is determined that the external signal is the on/off control signal, the apparatus temporarily performs output control, and outputs an operating state (S370).

Further, if the external signal is not a turn-on/off control signal, the apparatus determines whether the external signal is a state request signal (S380). If the external signal is the state request signal, the apparatus outputs an operating state (S390).

If the operation in the 'external signal processing mode' has been terminated, the apparatus proceeds to A of Fig. 4 to perform a procedure subsequent to A.

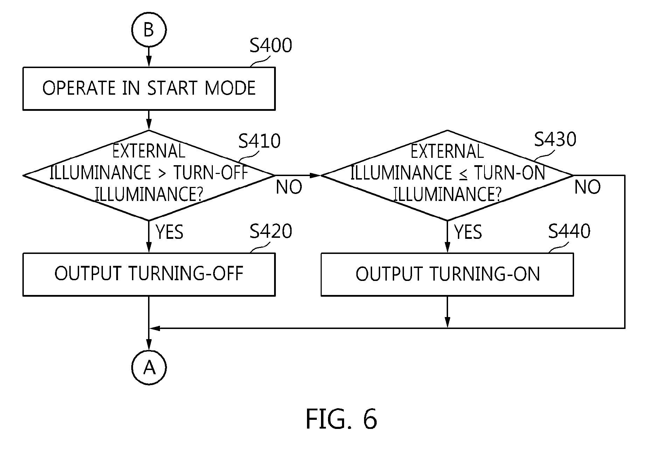

Fig. 6 is a flowchart showing the operation flow of the automatic street light turning-on/off control method in a start mode according to the present invention.

As shown in Fig. 6, the automatic street light turning-on/off control apparatus of the present invention is configured to, when operating in the start mode (S400), determine, based on a comparison, whether external illuminance is greater than turn-off illuminance (S410). In this case, if it is determined that the external illuminance is greater than the turn-off illuminance, the apparatus starts to turn off the street light (S420), otherwise (S410) the apparatus determines whether the external illuminance is equal to or less than the turn-on illuminance (S430). If the external illuminance is equal to or less than the turn-on illuminance (S430), the apparatus starts to turn on the street light (S440), otherwise (S430) the apparatus terminates the operation in the 'start mode.'

If the operation in the 'start mode' has been terminated, the apparatus proceeds to A of Fig. 4 to perform the subsequent procedure.

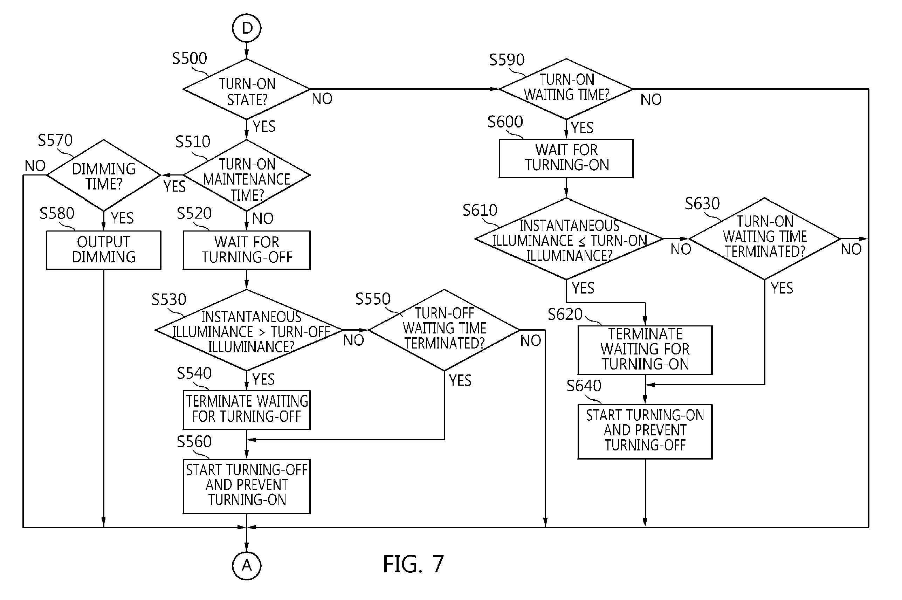

Fig. 7 is a flowchart showing the operation flow of the automatic street light turning-on/off control method in an operation mode according to the present invention.

As shown in Fig. 7, the automatic street light turning-on/off control apparatus according to the present invention is configured to, when a current state is a turn-on state among the operating states of the operation mode (S500), determine whether a current time is a turn-on maintenance time, and if the current time is the turn-on maintenance time (S510), determine whether the current time is a dimming time. If the current time is the dimming time (S570), the apparatus controls dimming output (S580), whereas if the current time is not a dimming time (S570), the apparatus completes the process.

Meanwhile, if the current time is not a turn-on maintenance time (S500), the apparatus waits for turning-off (S520). Thereafter, if application illuminance becomes greater than the turn-off illuminance (S530), the apparatus terminates waiting for turning-off (S540), and starts to turn off the street light (S560). In this case, the apparatus maintains the street light in the turn-off state for a turn-off maintenance time, and returns to A (S560). In contrast, if the external illuminance is less than the turn-off illuminance (S530), the apparatus determines whether the turn-off waiting time has been terminated, and if it is determined that the turn-off waiting time has been terminated (S550), starts to turn off the street light, and maintains the street light in the turn-off state (S560).

If the current state is not a turn-on state (S500), the apparatus determines whether the current time is a turn-on waiting time (S590). If the current time is the turn-on waiting time, the apparatus waits for turning-on (S600). Further, if the external illuminance is equal to or less than the turn-on illuminance (S610), the apparatus terminates waiting for turning-on (S620), and starts to turn on the street light (S640). In this case, for the turn-on maintenance time, the turn-on state is maintained.

In contrast, if, at S610, the application illuminance is greater than the turn-on illuminance, the apparatus determines whether the turn-on waiting time has been terminated (S630). If the turn-on waiting time has been terminated, the apparatus starts to turn on the street light, and maintains the street light in a turn-on state for the turn-on maintenance time.

If the above process has been completed, the apparatus proceeds to A of Fig. 4 to perform the subsequent procedure.

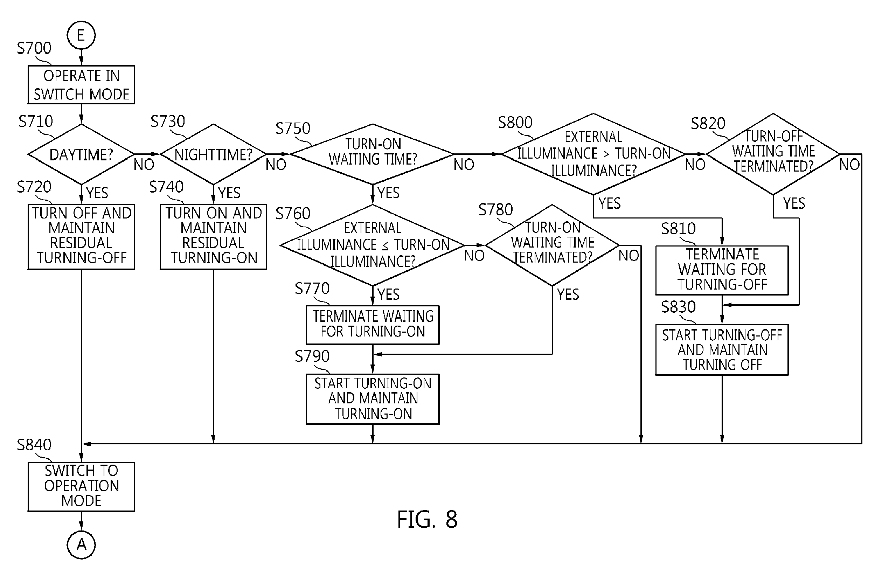

Fig. 8 is a flowchart showing the operation flow of the automatic street light turning-on/off control method in a switch mode according to the present invention.

As shown in Fig. 8, the automatic street light turning-on/off control apparatus according to the present invention is configured to, when operating in the 'switch mode' (S700), sense a current time and determine whether the current time is daytime (S710). If the current time is daytime (S710), the apparatus turns off the street light, and maintains the street light in a turn-off state for a residual turn-off maintenance time (S720).

In contrast, if the current time is not daytime (S710), the apparatus determines whether the current time is nighttime (S730). If the current time is nighttime (S730), the apparatus turns on the street light, and maintains the street light in a turn-on state for a residual turn-on maintenance time (S740).

If the current time is not nighttime (S730), the apparatus determines whether the current time corresponds to a turn-on waiting time (S750), and if the current time corresponds to the turn-on waiting time (S750), compares the application illuminance with turn-on illuminance. If the application illuminance is equal or less than the turn-on illuminance (S760), the apparatus terminates waiting for turning-on (S770), and starts to turn on the street light (S790). In this case, the street light is maintained in the turn-on state for the turn-on maintenance time.

Meanwhile, if it is determined at S760 that the external illuminance is greater than the turn-on illuminance, the apparatus determines whether the turn-on waiting time has been terminated (S780), and if the turn-on waiting time has been terminated (S780), starts to turn on the street light, and maintains the street light in the turn-on state for the turn-on maintenance time (S790).

If it is determined at S750 that the current time is not the turn-on waiting time, the apparatus determines that the current time is a turn-off waiting time and compares the external illuminance with the turn-on illuminance (S800), and if the external illuminance is greater than the turn-on illuminance (S800), terminates waiting for turning-off (S810), and starts to turn off the street light (S830). In this case, the street light is maintained in the turn-off state for the turn-off maintenance time.

In contrast, if the external illuminance is less than the turn-on illuminance at S800, the apparatus determines whether the turn-off waiting time has been terminated
(S820), and if the turn-off waiting time has been terminated, starts to turn off the street light (S820), and maintains the street light in the turn-on state for the turn-off maintenance time (S830).
If the operation in the above-described 'switch mode' has been completed, the apparatus switches the control mode to the 'operation mode' (S840), and proceeds to A of Fig. 4 to perform the subsequent procedure.
As described above, although the apparatus and method for automatically controlling turning-on/off of a street light according to the present invention have been described with reference to the illustrated drawings, the present invention is not limited by the embodiments disclosed in the present specification and the drawings and may be applied without departing from the scope and spirit of the present invention.

**Claims**

1. An apparatus for automatically controlling turning on/off of a street light, comprising:

   a photometric unit for measuring external illuminance from surroundings of a street light in real time;
   an illuminance collection unit for recording the measured external illuminance at intervals of a predetermined period and periodically updating the external illuminance;
   a reference illuminance calculation unit for analyzing the external illuminance recorded at intervals of the predetermined period, and calculating turn-on illuminance and turn-off illuminance that are references for control of turn-on output and turn-off output of the street light; and
   an output control unit for comparing the turn-on illuminance, the turn-off illuminance, and the external illuminance with each other and controlling output power of the street light.

2. The apparatus of claim 1, further comprising a time limit calculation unit for analyzing the external illuminance recorded at intervals of the predetermined period, and calculating, for the street light, time limits including at least one of a turn-on maintenance time for which turning-on is maintained, a turn-off maintenance time for which turning-off is maintained, a turn-on waiting time for which switching to turning-on is performed, and a turn-off waiting time for which switching to turning-off is performed, wherein the output control unit controls the output power of the street light using the time limits.

3. The apparatus of claim 1, wherein the illuminance collection unit samples the external illuminance, records the external illuminance at regular periods, and calculates daily illuminance updated depending on a variation in the external illuminance for at least one recent day.

4. The apparatus of claim 3, wherein the reference illuminance calculation unit analyzes the daily illuminance calculated by the illuminance collection unit, and updates the turn-on illuminance and the turn-off illuminance that are the references for control of turn-on output and turn-off output of the street light.

5. The apparatus of claim 2, wherein the time limit calculation unit divides a variation period of daily illuminance according to a rate of illuminance, calculates a period for which the external illuminance exceeds daytime period reference illuminance as a daytime period for the street light, calculates illuminance variation periods present before and after the daytime period as a morning period and an evening period, and calculates a residual period as a nighttime period.

6. The apparatus of claim 5, wherein the time limit calculation unit calculates the turn-off maintenance time from the daytime period, calculates the turn-off waiting time from the morning period, calculates the turn-on waiting time from the evening period, calculates the turn-on maintenance time from the nighttime period.

7. The apparatus of claim 6, wherein the output control unit is configured to,
   if the external illuminance becomes greater than the turn-off illuminance in the morning period, turn off the street light, and
   if the external illuminance does not become greater than the turn-off illuminance in the morning period and the turn-off waiting time has elapsed, turn off the street light.

8. The apparatus of claim 6, wherein the output control unit is configured to,
   if the external illuminance becomes less than the turn-on illuminance in the evening period, turn on the street light, and
   if the external illuminance does not become less than the turn-on illuminance in the evening period and the turn-on waiting time has elapsed, turn on the street light.

9. The apparatus of claim 1, wherein the illuminance collection unit samples the external illuminance measured by the photometric unit, and filters a variation in illuminance equal to or greater than a reference value and external interference.

10. The apparatus of claim 1, further comprising a communication unit for receiving an external command from a remote management device or transmitting operating states of the street light to outside of the apparatus.

11. A method of automatically controlling turning-on/off of a street light, comprising:

a photometric step of measuring external illuminance from surroundings of a street light in real time;
an illuminance collection step of recording the measured external illuminance at intervals of a predetermined period and periodically updating the external illuminance;
a reference illuminance calculation step of analyzing the external illuminance recorded at intervals of the predetermined period, and calculating turn-on illuminance and turn-off illuminance that are references for control of turn-on output and turn-off output of the street light; and
an output control step of comparing the turn-on illuminance, the turn-off illuminance, and the external illuminance with each other and controlling output power of the street light.

12. The method of claim 11, further comprising, before the output control step, a time limit calculation step of analyzing the external illuminance recorded at intervals of the predetermined period, and calculating time limits including at least one of a turn-on maintenance time for which turning-on of the street light is maintained, a turn-off maintenance time for which turning-off of the street light is maintained, a turn-on waiting time for which the street lamp switches to turning-on, and a turn-off waiting time for which the street light switches to turning-off.

13. The method of claim 11, wherein the illuminance collection step comprises sampling the external illuminance, recording the external illuminance at regular periods, and calculating daily illuminance updated depending on a variation in the external illuminance for at least one recent day.

14. The method of claim 13, wherein the reference illuminance calculation step comprises analyzing the daily illuminance calculated at the daily illuminance calculation step, and updating the turn-on illuminance and the turn-off illuminance that are the references for control of turn-on output and turn-off output of the street light.

15. The method of claim 12, wherein the time limit calculation step comprises dividing a variation period of daily illuminance according to a rate of illuminance, calculating a period for which the external illuminance exceeds daytime period reference illuminance as a daytime period for the street light, calculating illuminance variation periods present before and after the daytime period as a morning period and an evening period, and calculating a residual period as a nighttime period.

16. The method of claim 15, wherein the time limit calculation step is configured to calculate the turn-off maintenance time from the daytime period, calculate the turn-off waiting time from the morning period, calculate the turn-on waiting time from the evening period, calculate the turn-on maintenance time from the nighttime period.

17. The method of claim 15, wherein the output control step is configured to, if the external illuminance becomes greater than the turn-off illuminance in the morning period, turn off the street light.

18. The method of claim 15, wherein the output control step is configured to, if the external illuminance does not become greater than the turn-off illuminance in the morning period and the turn-off waiting time has elapsed, turn off the street light.

19. The method of claim 15, wherein the output control step is configured to, if the external illuminance becomes less than the turn-on illuminance in the evening period, turn on the street light.

20. The method of claim 15, wherein the output control step is configured to, if the external illuminance does not become less than the turn-on illuminance in the evening period and the turn-on waiting time has elapsed, turn on the street light.

21. The method of claim 11, wherein the illuminance collection step comprises sampling the external illuminance measured at the photometric step, and filtering a variation in illuminance equal to or greater than a reference value and external interference.

22. The method of claim 11, further comprising a communication step of receiving an external command from a remote management device or transmitting operating states of the street light to outside.

FIG. 1

| A | B | C | D | A |
|---|---|---|---|---|
| (TURN-ON SECTION) | (TURN-OFF WAITING SECTION) | (TURN-OFF SECTION) | (TURN-ON WAITING SECTION) | (TURN-ON SECTION) |

$P_1$    $P_2$          $P_3$    $P_4$

0
O'CLOCK

24
O'CLOCK

FIG. 2

FIG. 3

FIG. 4

FIG. 5

EP 2 804 445 A1

FIG. 6

FIG. 7

FIG. 8

EP 2 804 445 A1

## INTERNATIONAL SEARCH REPORT

International application No.

**PCT/KR2012/010078**

### A. CLASSIFICATION OF SUBJECT MATTER

***H05B 37/02(2006.01)i***

According to International Patent Classification (IPC) or to both national classification and IPC

### B. FIELDS SEARCHED

Minimum documentation searched (classification system followed by classification symbols)
H05B 37/02; F21W 111/02

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: street light or light, illumination sensor, standard illuminance, lighting or lights-out

### C. DOCUMENTS CONSIDERED TO BE RELEVANT

| Category* | Citation of document, with indication, where appropriate, of the relevant passages | Relevant to claim No. |
|---|---|---|
| Y | KR 10-2010-0039537 A (SAM CHANG S.C CO., LTD.) 16 April 2010<br>See abstract; claims 1-6; figure 1. | 1,3-4,9-10,11<br>,13-14,21-22 |
| A | See abstract; claims 1-6; figure 1. | 2,5-8,12,15-20 |
| Y | KR 10-0654373 B1 (ALLLITELIFE CO., LTD.) 05 December 2006<br>See abstract; claim 1; figure 1. | 1,3-4,9-10,11<br>,13-14,21-22 |
| A | See abstract; claim 1; figure 1. | 2,5-8,12,15-20 |
| A | KR 10-2003-0009937 A (GONG, Jae young et al.) 05 February 2003<br>See abstract; claim 1; figures 1-2. | 1-22 |
| A | KR 10-0997539 B1 (SHIN DAM ENGINEERING CO., LTD.) 30 November 2010<br>See abstract; claims 1-2; figures 2-4. | 1-22 |
| A | KR 10-2011-0136223 A (ACTS ENERGY TECHNOLOGY C.,LTD) 21 December 2011<br>See abstract; claims 1-5; figure 4. | 1-22 |

☐ Further documents are listed in the continuation of Box C. ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 25 MARCH 2013 (25.03.2013) | **25 MARCH 2013 (25.03.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

**INTERNATIONAL SEARCH REPORT**
Information on patent family members

International application No.

**PCT/KR2012/010078**

| Patent document cited in search report | Publication date | Patent family member | Publication date |
|---|---|---|---|
| KR 10-2010-0039537 A | 16.04.2010 | NONE | |
| KR 10-0654373 B1 | 05.12.2006 | NONE | |
| KR 10-2003-0009937 A | 05.02.2003 | KR 20-0251467 Y1 | 22.11.2001 |
| KR 10-0997539 B1 | 30.11.2010 | NONE | |
| KR 10-2011-0136223 A | 21.12.2011 | NONE | |

Form PCT/ISA/210 (patent family annex) (July 2009)